Europäisches Patentamt

European Patent Office

Office européen des brevets

(11) Publication number: **0 226 655**
**A1**

## (12) EUROPEAN PATENT APPLICATION

(21) Application number: 85116453.3

(22) Date of filing: 21.12.85

(51) Int. Cl.⁴: **A47K 11/02**

(43) Date of publication of application:
**01.07.87 Bulletin 87/27**

(84) Designated Contracting States:
**DE FR GB IT NL**

(71) Applicant: **Pozzi, Carlo Maurizio**
**Strada Cantonale**
**CH-6978 Gandria Canton Ticino(CH)**

(72) Inventor: **Pozzi, Carlo Maurizio**
**Strada Cantonale**
**CH-6978 Gandria Canton Ticino(CH)**

(74) Representative: **Klausner, Erich et al**
**c/o Ufficio Internazionale Brevetti Ing. C.**
**Gregorj S.p.A. Via Dogana 1**
**I-20123 Milano(IT)**

(54) Chemical portable W.C. incorporating a cleaning brush.

(57) The chemical type portable W.C. consists of a bowl surrounded by a wall forming the reservoir tank (A2) for the water and by a bottom container (A1) for the waste.

A cleaning brush (B), can be placed in a water proof cylindrical housing (10) fitted in the water tank by introducing it through tank filling opening (6); housing (10) is kept in the desired position by closing plug (20) of opening (6).

FIG.2

EP 0 226 655 A1

## "CHEMICAL PORTABLE W.C. IN CORPORATING A CLEANING BRUSH"

The present invention relates to a portable chemical W.C. incorporating a cleaning brush.

Up to the present day it has been difficult, in portable chemical WC units, to find a suitable location for the bowl cleaning brush, and in fact, this undoubtedly useful item is not present in the models currently available on the market.

The purpose of this invention is to obviate the above drawback by incorporating also the cleaning brush in the portable chemical W.C. so that its housing, forms together with the chemical W.C. a single easily transportable unit, equipped with an accessory, such as the brush which improves sanitary conditions without affecting the unit's general appearance.

It is generally known that portable WC's normally consist of a top body including a bowl surrounded by a wall or tank for the flushing water and by a bottom container for the organic wastes.

According to this invention, the brush is fitted in a preferably cylindrical housing inserted in the filling aperture of the tank, the plug of which isolates the brush and its housing from the water in the tank and also secures said housing firmly in the desired position.

In this way the water is not contaminated and can be used also for body washing purposes. The housing is introduced, with a slight forcing, in the filling aperture so that it will not come out as a result of the water pressure, and is conceived for easy grasping by the user for removal.

The invention will now be described in conjunction with the annexed drawing which illustrates, by way of example, but not limitatively, the extent of the invention, specifically:

Fig. 1 is an exploded perspective view of the parts of a chemical W.C.

Fig. 2 is a side view, on an enlarged scale with respect to Fig. 1, of a chemical W.C. showing the brush and relevant housing extracted.

Fig. 3 shows the same chemical W.C.of Fig. 2, seen as a partial view in cross section and with the brush incorporated in it, according to the invention.

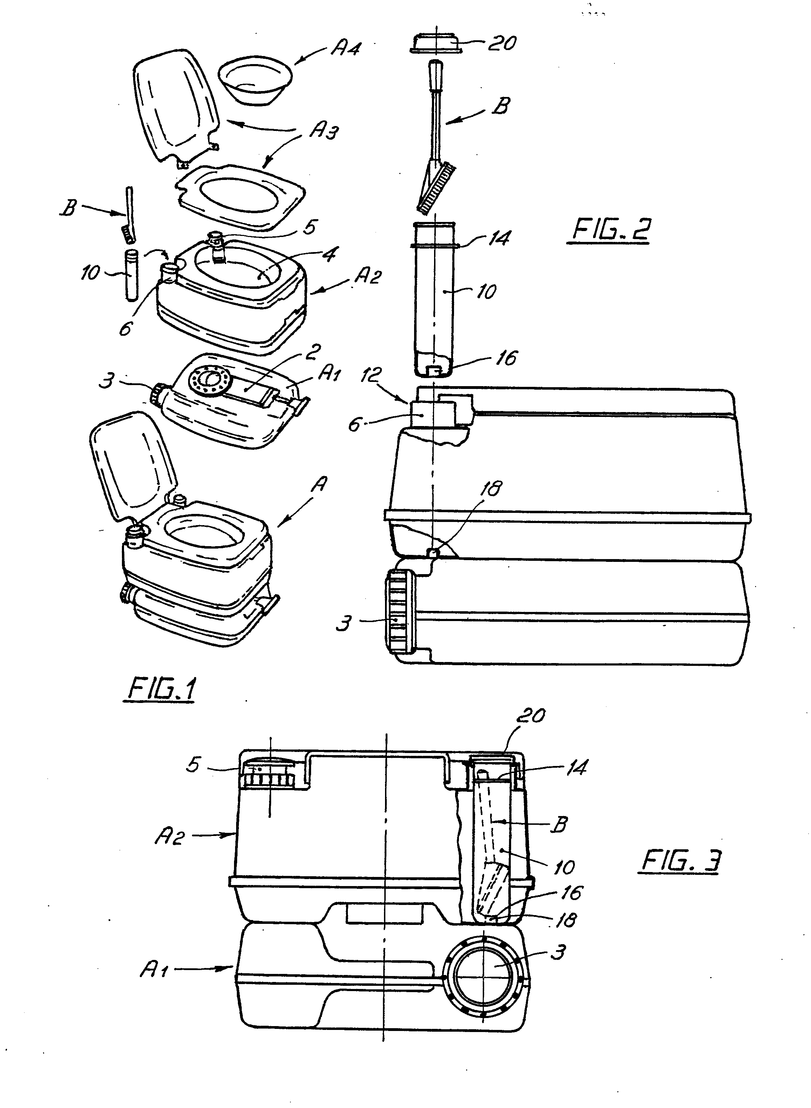

The portable chemical W.C. shown in Fig. 1, consists, essentially, of two parts $A_1$ and $A_2$ which may be secured to each other. $A_1$ is the container for the organic waste, equipped with a closing slide 2 and a discharging opening 3, while top part $A_2$ constitutes a tank for the water surrounding bowl 4, comprising a flushing pump 5 and a filling opening 6 . The W.C. is completed by the seat and cover $A_3$ and possibly a small basin $A_4$ which may be used as a "bidet" or handwashing basin.

Cleaning brush B, which was heretofore presented as a separate element, is inserted according to this invention, in the body of tank $A_2$ as shown in Figs. 2 and 3.

According to this invention there is provided with a housing 10 for brush B said housing being substantially cylindrical of a diameter adequate to fit that in opening 6 for introducing the water in the tank.

The length of housing 10 is such as to project beyond level 12 of opening 6 when resting on the tank bottom so as to be easily lifted by the user to utilize brush B or to fill the tank.

In the proximity of its top opening, housing 10 is provided with an annular ledge 14 obtained in the stamping phase or by a suitable gasket in elastometer inserted in a groove and such as to provide a slight attrition on the inside wall of filling aperture 6. The purpose of this is to avoid that the housing itself be pushed outward by the water pressure in the tank due to a floating effect.

The bottom of housing 10 is provided with a blind seat 16 in which enters a corresponding projection 18 coming from the bottom of the water tank to maintain in vertical position said housing also in the case in which the water contained in said tank oscillates.

The plug 20 which can be snapped on the opening 6, can seal at the same time both the opening 6 and the upper aperture of housing 10 maintaining said housing pressed against the bottom of the tank and engaged on the projection 18 to maintain the housing in the pre-established position.

## Claims

1) Portable chemical W.C. consisting of a bowl surrounded by a tank for the flushing water and by a bottom container to collect the waste, characterized in that it is provided with a housing(10) for a brush (B) said housing being inserted in the water tank by introducing it through filling aperture (6), secured therein in the desired position and isolated from the surrounding water by plug (20) of the tank itself.

2) Chemical portable W.C. according to claim 1, characterized in that housing (10) for brush (B) introduced in aperture (6) of the tank, placed in contact with the bottom of the latter has a length such that its top edge exceeds level (12) of the filling aperture to facilitate the removing by the user.

3) Chemical portable W.C. according to claims 1 and 2, characterized in that a blind seat (16) is provided in the bottom of housing (10), said seat being apt to fit a corresponding projecting part - (18) obtained by means of molding on the tank bottom to maintain the housing (10) axially aligned with filling aperture (6) of the tank.

4) Chemical portable W.C. according to claims 1 thru 3, characterized in that brush housing (10) is provided, close to its top opening, with an annular enlargement (14) with outer diameter apt to provide a slight attrition against the internal wall of the filling aperture (6) so that said housing will not be pushed upward by the water contained in the tank due to a floating effect.

5) Portable chemical W.C. according to claim 4, characterized in that annular enlargement (14) is obtained by molding on the body of housing (10).

6) Portable chemical W.C. according to claim 4 , characterized in that the annular enlargement is obtained by fitting an elastomer gasket on housing (10), possibly within a seat in the housing itself.

7) Portable chemical W.C. in accordance with claims 1 thru 5 or from 1 thru 4 and 6, characterized in that plug (20) of aperture (6), snapped on the latter, engages also with the aperture of housing (10) pressing the opposite end against the tank bottom thereby to maintain said housing firmly secured in the desired position, centered on the projecting part (18).

*FIG.1*

*FIG.2*

*FIG.3*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 025 635 (THETFORD CORP.) * Abstract; figure 4 * | 1 | A 47 K 11/02 |
| A | EP-A-0 095 903 (ANTOS) | | |

|  | TECHNICAL FIELDS SEARCHED (Int. Cl.4) |
|---|---|
|  | A 47 K<br>E 03 D |

The present search report has been drawn up for all claims

| Place of search | Date of completion of the search | Examiner |
|---|---|---|
| THE HAGUE | 14-08-1986 | CLASING M.F. |